# EUROPÄISCHE PATENTSCHRIFT

(11) **EP 4 010 770 B1**
(45) Veröffentlichungstag und Bekanntmachung des Hinweises auf die Patenterteilung: **26.07.2023**
(21) Anmeldenummer: 20792924.1
(22) Anmeldetag: 04.09.2020
(51) Int. Cl.: G05B 23/02

(54) **DIAGNOSE VON TECHNISCHEN SYSTEMEN MITTELS HAUPTKOMPONENTENANALYSE (PCA)**
DIAGNOSIS OF TECHNICAL SYSTEMS USING PRINCIPAL COMPONENTS ANALYSIS (PCA)
DIAGNOSTIC DE SYSTÈMES TECHNIQUES UTILISANT UNE ANALYSE EN COMPOSANTES PRINCIPALES (PCA)

(30) Priorität: 30.09.2019 DE 102019215068
(43) Veröffentlichungstag der Anmeldung: 15.06.2022
(73) Patentinhaber: Siemens Mobility GmbH, 81739 München (DE)
(72) Erfinder: AUFDERHEIDE, Helge, 80634 München (DE)
(74) Vertreter: Siemens Patent Attorneys
(86) Internationale Anmeldenummer: PCT/EP2020/074734
(87) Internationale Veröffentlichungsnummer: WO 2021/063629

(56) Entgegenhaltungen:
- WO-A1-2015/139709
- US-A1- 2019 064 788
- US-B2- 7 734 451

## Beschreibung

Die Erfindung betrifft ein Verfahren zur Diagnose eines technischen Systems, wobei Abweichungen von Werten zu wenigstens n, mit n≥2, Variablen zur Beschreibung eines momentanen Zustands des technischen Systems zu einem bestimmten Zeitpunkt von vorgegebenen Werten zur Beschreibung eines Normalzustands ermittelt werden, um auf einen Fehler zu schließen, ein Computerprogrammprodukt und einen Datenträger sowie eine Vorrichtung.

Ein Ziel von Predictive Maintenance ist die Vorhersage von Komponentenausfällen, wie dem Ausfall eines Lagers oder eines Kühlsystems. Üblicherweise werden Komponenten identifiziert, die sich gegenüber anderen Komponenten oder gegenüber ihrer eigenen Vergangenheit ungewöhnlich verhalten. Ob der großen Anzahl Sensoren, Komponenten in einem Zug und deren Abhängigkeit vom Fahrverhalten ist es schwierig die Komponenten automatisch und umfassend zu überwachen und automatisch Wartungsmaßnahmen zu erzeugen.

Es sind verschiedene Methoden zur Fehlererkennung und/oder Fehlerursachenzuordnung bekannt geworden. So können das Verhalten gleicher Messgrößen verschiedener Komponenten des gleichen Typs anhand einfacher Metriken verglichen und Abweichler als problematisch markiert werden. Auch bekannt ist, dass eine sogenannte Ingenieurs-Normkurve für den Betrieb einer Komponente erstellt wird, z.B. ein Druckverlauf in Abhängigkeit von einer Temperatur, beispielsweise proportional zur Temperatur, und die Abweichung einer Messung von dieser Beziehung wird überwacht, um die Abweichung dieser Komponente von ihrem Normalzustand zu erkennen. Eine Zuordnung von Fehlerursachen kann anhand von einfachen Regeln abgebildet werden, z.B. wenn Temperatur X > Temperatur Y und Druck A < Druck B, dann liegt Fehler Z vor.

Die EP 3 460 727 A1 oder die EP 3 427 325 A1 offenbaren gattungsgemäße Verfahren zur Überwachung und Fehleridentifizierung von technischen Systemen.

Auch die EP 3 142 909 A1 lehrt ein Verfahren zum Ermitteln einer Betriebsbeanspruchung eines Bauteils während des Betriebs des Bauteils. In einer Justierphase werden anhand von Messwerten zu verschiedenen Betriebsmodi des Bauteils eine Berechnungsvorschrift ermittelt, welche in einer anschließenden Betriebsphase zur Ermittlung einer Betriebsbeanspruchung angewandt werden kann.

Die Offenlegungsschrift WO 2015/139709 A1 lehrt ein Verfahren zur Diagnose eines technischen Systems. Zur Fehlererkennung wird ermittelt, ob erfasste Messwerte innerhalb eines Referenzmodells zur Beschreibung eines Normalzustands liegen, welches Referenzmodell durch die Hauptkomponenten von vorgegebenen Werten aufgespannt wird.

US 7 734 451 B2 offenbart ein weiteres Verfahren zur Fehlererkennung. Und US 2019/064788 A1 betrifft ein Verfahren zur Datenanalyse mittels Hauptkomponentenanalyse.

Der Erfindung liegt die Aufgabe zugrunde, die Diagnose eines technischen Systems automatisiert durchführen zu können.

Gelöst wird die Aufgabe durch die Gegenstände der unabhängigen Patentansprüche. Weiterbildungen und Ausgestaltungen der Erfindung finden sich in den Merkmalen der abhängigen Patentansprüche wieder.

Ein erfindungsgemäßes Verfahren zur Diagnose eines technischen Systems, insbesondere eines spurgebundenen Fahrzeugs, insbesondere eines Schienenfahrzeugs, wobei Abweichungen von Werten, beispielsweise von erfassten Messwerten, zu wenigstens n, mit n≥2, voneinander verschiedenen Variablen zur Beschreibung eines momentanen Zustands des technischen Systems, insbesondere wenigstens einer Komponente des technischen Systems, zu einem Zeitpunkt von vorgegebenen Werten zur Beschreibung eines Normalzustands ermittelt werden, um auf einen Fehler zu schließen, umfasst folgende Verfahrensschritte:
a. Durchführen einer Hauptkomponentenanalyse von vorgegebenen Werten zu den wenigstens n, mit n≥2, Variablen und Ermitteln wenigstens einer Hauptkomponente der n Variablen;
b. Vorgeben der wenigstens einen Hauptkomponente zur Beschreibung des Normalzustands des technischen Systems;
c. Ermitteln der Abweichungen der Werte zu den n Variablen zur Beschreibung des momentanen Zustands des technischen Systems von der wenigstens einen vorgegebenen Hauptkomponente zur Beschreibung des Normalzustands, um auf einen Fehler zu schließen.

Bei dem technischen System handelt es sich beispielsweise um ein komplexes System mit mehreren Komponenten. Erfindungsgemäß betreffen die n Variablen dieselbe physikalische Größe und/oder beschreiben den Zustand derselben Komponente des technischen Systems. Beispielsweise betrifft eine erste Variable eine Temperatur T₁ eines Getriebes im Bereich eines Lagers einer Eingangswelle und eine zweite Variable betrifft eine Temperatur T₂ desselben Getriebes im Bereich eines Lagers einer Ausgangswelle. In diesem Beispiel betreffen die n=2 Variablen dieselbe Messgröße und dieselbe Komponente.

Die Werte zu den n Variablen zur Beschreibung des momentanen Zustands des technischen Systems können, insbesondere als Messwerte, zu einem bestimmten Zeitpunkt erfasst werden. Ein Zeitpunkt ist als ein bezüglich der Rechengenauigkeit hinreichend genaues Zeitmaß hier so zu verstehen, dass die Werte auch innerhalb eines vorgegebenen Zeitraums erfasst werden können. Dieser Zeitraum muss hingegen kurz genug sein, um den Zustand des technischen Systems zu einem Ereignis zum bestimmten Zeitpunkt hinreichend zu beschreiben. Um bei obigem Beispiel zu bleiben T₁ und T₂ wurden zum selben Zeitpunkt erfasst.

Die Werte zu den n Variablen zur Beschreibung des momentanen Zustands des technischen Systems stammen insbesondere aus dem laufenden Betrieb des technischen Systems. Der momentane Zustand des technischen Systems kann somit auch als Betriebszustand bezeichnet werden. Abweichungen werden ermittelt zwischen den Werten zu den n Variablen zur Beschreibung des Betriebszustands des technischen Systems und den Werten zu denselben n Variablen zur Beschreibung des Normalzustands.

Wie oben bereits ausgeführt, können die Werte zu den n Variablen zur Beschreibung des momentanen Zustands des technischen Systems als Messwerte erfasst werden. Dies geschieht während einer Betriebsphase des technischen Systems, beispielsweise während einer Fahrt des Schienenfahrzeugs. Das Verfahren kann dann entsprechend einen weiteren Verfahrensschritt zur Erfassung der Messwerte zu den n Variablen zur Beschreibung des momentanen Zustands des technischen Systems umfassen. Das technische System kann entsprechend zur Erfassung von Werten zu jeder Variablen eine geeignet ausgebildete Messeinrichtung aufweisen.

Die Werte zu den n Variablen zur Beschreibung des momentanen Zustands können aber auch als vorverarbeitete Werte vorliegen. Dann werden sie beispielsweise aus erfassten Messwerten ermittelt. Die Werte zu den n Variablen zur Beschreibung des Normalzustands können ebenfalls als Messwerte vorliegen, die zu Zeitpunkten erfasst wurden, zu denen sich das technische System bekanntlich in einem Normalzustand befand.

Im Verfahrensschritt a. wird zunächst, insbesondere mittels einer geeignet ausgebildeten Auswerteeinheit, eine Hauptkomponentenanalyse von den vorgegebenen Werten zu den wenigstens n Variablen zur Beschreibung des Normalzustands des technischen Systems durchgeführt. Als Ergebnis werden die Hauptkomponenten der vorgegebenen Werte zu den n Variablen erhalten. Zur Durchführung der Hauptkomponentenanalyse kann bildlich ein Zustandsraum aufgespannt werden, mit den n voneinander verschiedenen Variablen als Dimensionen. Wieder auf das obige Beispiel zurückkommend wird ein zweidimensionales Diagramm aufgestellt, mit T₁ und T₂ als Achsen. Die Werte zu T₁ und T₂, die zum selben Zeitpunkt erfasst wurden bzw. die denselben Zeitpunkt repräsentieren, werden als ein Datenpunkt in das Diagramm eingetragen, z.B. bilden T₁ und T₂, jeweils zum Zeitpunkt t₀ erfasst, einen Datenpunkt. Liegen nun viele Werte zu unterschiedlichen Zeitpunkten t₀, t₁, t₂ ... vor, entsteht ein Punktdiagramm. Das Durchführen einer Hauptkomponentenanalyse erfolgt nun auf bekannte Art und Weise. Bei zwei Variablen werden zwei Hauptkomponenten erhalten.

Verfahrensschritt a. erfolgt insbesondere während einer Lernphase. Auch Verfahrensschritt b. erfolgt insbesondere in der Lernphase: es wird, insbesondere mittels der Auswerteeinheit, wenigstens eine der ermittelten Hauptkomponenten zur Beschreibung des Normalzustands des technischen Systems, insbesondere der wenigstens einer Komponente des technischen Systems, vorgegeben. Hauptkomponenten umfassen als Geraden die Werte zu den n Variablen zur Beschreibung des Normalzustands des technischen Systems zu denen die Abweichung der Werte zu den n Variablen zur Beschreibung des Betriebszustands ermittelt werden. Hauptkomponenten werden üblicherweise in Vektorschreibweise dargestellte und werden daher auch als Hauptkomponentenvektor bezeichnet.

Es werden in Verfahrensschritte b. höchstens x, mit 1≤x<n, Hauptkomponenten der n Variablen zur Beschreibung des Normalzustands vorgegeben. Bei zwei Variablen T₁ und T₂ wird somit nur eine Hauptkomponente zur Beschreibung des Normalzustands des technischen Systems vorgegeben. Weitergebildet werden ausschließlich die Hauptkomponenten, die zusammen wenigstens 70% (kumulativer Prozentsatz), insbesondere wenigstens 80%, der gesamten Varianz der Werte der n Variablen zur Beschreibung des Normalzustands abdecken, vorgegeben. Eine weitere Weiterbildung sieht vor, dass nur die dominante Hauptkomponente, also die Hauptkomponente mit dem größten Anteil an der Gesamtvarianz der Daten, vorgegeben wird.

Mit der Hauptkomponentenanalyse geht eine Datenreduktion einher. Umfangreiche Datensätze werden vereinfacht und strukturiert, da eine Vielzahl von Variablen durch eine geringe Anzahl möglichst aussagekräftiger Hauptkomponenten genähert wird. Die Durchführung einer Hauptkomponentenanalyse und die Vorgabe wenigstens einer Hauptkomponenten zur Beschreibung des Normalzustands des technischen Systems ist zudem automatisiert ausführbar.

Weitergebildet wird Verfahrensschritt a. für m, mit m≥2, voneinander verschiedene Betriebsmodi des technischen Systems, insbesondere Fahrmodi des Schienenfahrzeugs, ausgeführt. In Verfahrensschritt b. wird dann die wenigstens eine Hauptkomponente zur Beschreibung des Normalzustands in Abhängigkeit eines momentanen Betriebsmodus Z des technischen Systems aus den m Betriebsmodi, insbesondere in Abhängigkeit des momentanen Fahrmodus des Schienenfahrzeugs aus den m Fahrmodi, ausgewählt und entsprechend zur Beschreibung des Normalzustands vorgegeben.

Der momentane Betriebsmodus Z, beispielsweise der momentane Fahrmodus, ist der Modus aus den m vorgegebenen Betriebsmodi, in welchem das technische System, beispielsweise das Schienenfahrzeug, momentan betrieben wird und zu welchem die Werte zu den n Variablen zur Beschreibung des momentanen Zustands des technischen Systems, insbesondere wenigstens einer Komponente des technischen Systems, erfasst bzw. ermittelt werden.

Danach werden in Verfahrensschritten a. und b. jeweils eine Hauptkomponentenanalyse für die m vorgegebenen Betriebsmodi durchgeführt und jeweils wenigstens eine Hauptkomponente zur Beschreibung des Normalzustands des technischen Systems, insbesondere der wenigstens einer Komponente des technischen Systems, in dem entsprechenden Betriebsmodus Z der m vorgegebenen Betriebsmodi vorgegeben. Die Auswahl der jeweiligen Hauptkomponenten erfolgt in Abhängigkeit des momentanen Betriebsmodus Z.

In Verfahrensschritt c. würden dann entsprechend Abweichungen von der wenigstens einen Hauptkomponente in Abhängigkeit des momentanen Betriebsmodus Z ermittelt werden. Verfahrensschritt c. würde dann entsprechend lauten: Ermitteln der Abweichungen der Werte zu den n Variablen zur Beschreibung des momentanen Zustands des technischen Systems in einem Betriebsmodus Z aus den m vorgegebenen Betriebsmodi von der wenigstens einen vorgegebenen Hauptkomponente zur Beschreibung des Normalzustands des technischen Systems in demselben Betriebsmodus Z der m vorgegebenen Betriebsmodi, um auf einen Fehler zu schließen.

Veranschaulicht wird allgemein in Verfahrensschritt c. analog zu Verfahrensschritt a., insbesondere mittels der Auswerteeinheit, ein Zustandsraums den n Variablen als Dimensionen aufgestellt und die Werte zu den n Variablen zur Beschreibung des momentanen Zustands des technischen Systems, insbesondere im Betrieb, als Datenpunkt(e) eingetragen sowie die entsprechend vorgegebene Hauptkomponente eingetragen. Anschließend werden die Abweichungen der Werte zu den n Variablen zur Beschreibung des momentanen Zustands des technischen Systems zu der vorgegebenen Hauptkomponente ermittelt. Aus den Abweichungen wird auf einen Fehler geschlossen.

Zur Ermittlung der Abweichung wird gemäß einer weiteren Weiterbildung eine Distanz der Werte der n Variablen zur Beschreibung des momentanen Zustands zu der wenigstens einen vorgegebenen Hauptkomponente zur Beschreibung des Normalzustands ermittelt.

Hierzu kann beispielsweise zu jedem Datenpunkt aus den Werten zu den n Variablen zur Beschreibung des momentanen Zustands der kürzeste Distanzvektor zur vorgegebenen Hauptkomponente (zum Hauptkomponentenvektor) errechnet werden. Anschließend wird die Norm des Vektors errechnet. Dies kann eine euklidische Norm sein oder eine abweichende Metrik. Beispielsweise wird die Wurzel aus der Summe der Betragsbiquadrate (4. Potenz) der Komponenten des Vektors als Norm errechnet. Wiederum auf das obige Beispiel zurückkommend: der Distanzvektor D mit den Komponenten D₁ und D₂ des Datenpunkts der Werte T₁ und T₂ zum Zeitpunkt t₀ zur Beschreibung des momentanen Zustands des technischen Systems zum Zeitpunkt t₀ wird zum dominanten Hauptkomponentenvektor errechnet. Anschließend wird das Distanzmaß PR errechnet aus der Summe der Betragsbiquadrate PR = D₁⁴ + D₂⁴.

Weitergebildet kann in einem dem Verfahrensschritt c. nachfolgenden Verfahrensschritt d. in Abhängigkeit des Maßes der Abweichung auf einen vorgegebenen Fehler geschlossen. Voneinander verschiedene Fehler und auch deren Fehlerursachen können bekannt sein und in Abhängigkeit des Distanzmaßes kann ein Fehler erkannt und auf seine Fehlerursache geschlossen werden.

Ist der oben errechnete Wert PR beispielsweise kleiner als ein systemabhängiger Grenzwert E1, also PR<E1, so wird auf einen Fehler in einem der Temperatursensoren zur Erfassung der Temperaturen T₁ und T₂ erkannt, beispielsweise dem Temperatursensor mit dem größten Eintrag im Distanzvektor D. Ist der Wert hingegen größer als ein weiterer systemabhängiger Grenzwert E2, also PR>E2, so handelt es sich um eine Fahrzustands-erzeugte Abweichung.

Neben diesen und weiteren Distanzmaßen kann auch eine Mustererkennung zur Ermittlung der Abweichung in Verfahrensschritt c. durchgeführt werden.

Verfahrensschritt c. und gegebenenfalls Verfahrensschritt d. werden insbesondere in einer Betriebsphase des Verfahrens ausgeführt.

Mit dem Verfahren lässt sich eine automatische Fehlertyperkennung mittels Mustererkennung von Abweichungen von betriebszustandsabhängigen Hauptkomponenten ausführen.

Gemäß dem Verfahren wird per Hauptkomponentenanalyse die Fahrzustandsabhängig plausibelste Kombination von Sensor-Werten erlernt. Indem diese Kombination mit tatsächlich gemessenen Werten verglichen wird, entstehen Abweichungsmuster, die zur Vorhersage des Fehlertyps der Komponente genutzt werden und der Erzeugung von Wartungsmaßnahmen dienen können.

Weitere Vorteile des Verfahrens sind darin zu sehen, dass es eine automatische Erkennung von ungewöhnlichem Komponentenverhalten sowie eine automatische Erkennung von Sensor und Komponentenfehlern ermöglicht. Auch ermöglicht es eine gleichzeitige Bewertung der Funktion einer Komponente anhand von eigenem Verhalten und dem Verhalten äquivalenter anderer Komponenten ohne visuelle Inspektion. Wartungsanforderungen können zudem automatisch erzeugt werden.

Das erfindungsgemäße Computerprogrammprodukt oder auch Softwareprogramm oder nur kurz "App" genannt, ist auf geeignet ausgebildeten Auswerteeinheit implementierbar bzw. implementiert, wobei diese Auswerteeinheit ein Computer ist bzw. als solcher wirkt, wodurch es sich beim erfindungsgemäßen Verfahren um ein sogenanntes computerimplementiertes Verfahren, also von den der Auswerteeinheit ausführbares bzw. ausgeführtes Verfahren handelt.

Das Computerprogrammprodukt umfasst Befehle umfasst, die bei der Ausführung des Programms durch die Auswerteeinheit, auf welchem es installiert ist, diese veranlassen, die entsprechenden Schritte des erfindungsgemäßen Verfahrens auszuführen.

Es kann auch auf einem Datenträger gespeichert, der somit seinerseits Befehle umfasst, die bei der Ausführung durch einen geeigneten, insbesondere handelsüblichen, Computer, diesen veranlassen, die Schritte des erfindungsgemäßen Verfahrens auszuführen. Der Datenträger kann dabei jedes beliebige computerlesbare Speichermedium umfassen.

Die erfindungsgemäße Vorrichtung umfasst das technische System und eine Auswerteeinheit, wie in Anspruch 10 beschrieben.

Das technische System kann darüber hinaus geeignete Mittel zur Erfassung von Messwerten zur Beschreibung des momentanen Zustands des Systems aufweisen. Bei dem technischen System handelt es sich insbesondere um ein Schienenfahrzeug. Die Auswerteeinheit kann landseitig, beispielsweise in einer zentralen Auswerteeinrichtung, angeordnet sein, wobei dann das Schienenfahrzeug eine geeignete Sendeeinheit zur Übertragung der Messwerte an Land aufweist.

Die Werte zur Beschreibung des momentanen Zustands werden entsprechend auf dem fahrenden Fahrzeug erfasst oder ermittelt und an Land zur Durchführung des Verfahrensschritts c. und gegebenenfalls weiterer, nachfolgender Verfahrensschritte übermittelt. Verfahrensschritt c. wird an Land in der zentralen Auswerteeinrichtung durchgeführt. Das Ergebnis oder eine daraus gefolgerte Maßnahme kann, insbesondere wenn ein Eingriff in den Betrieb des technischen Systems, insbesondere des Schienenfahrzeugs, erforderlich ist, beispielsweise ein sofortiger Halt, wieder auf das Fahrzeug rückübertragen werden. In der Regel wird aus dem Ergebnis jedoch eine Wartungsmaßnahme abgeleitet, die in der Wartungsplanung des Fahrzeugs berücksichtigt wird. Die landseitige Auswerteeinrichtung umfasst neben der Auswerteeinheit eine entsprechend geeignete Empfangseinheit zum Empfang und zur Weiterverarbeitung der übermittelten Daten.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt ein Diagramm zu einer Hauptkomponentenanalyse zu zwei Variablen,
- Fig. 2: zeigt eine Antriebskomponente eines Schienenfahrzeugs mit mehreren Sensoren.

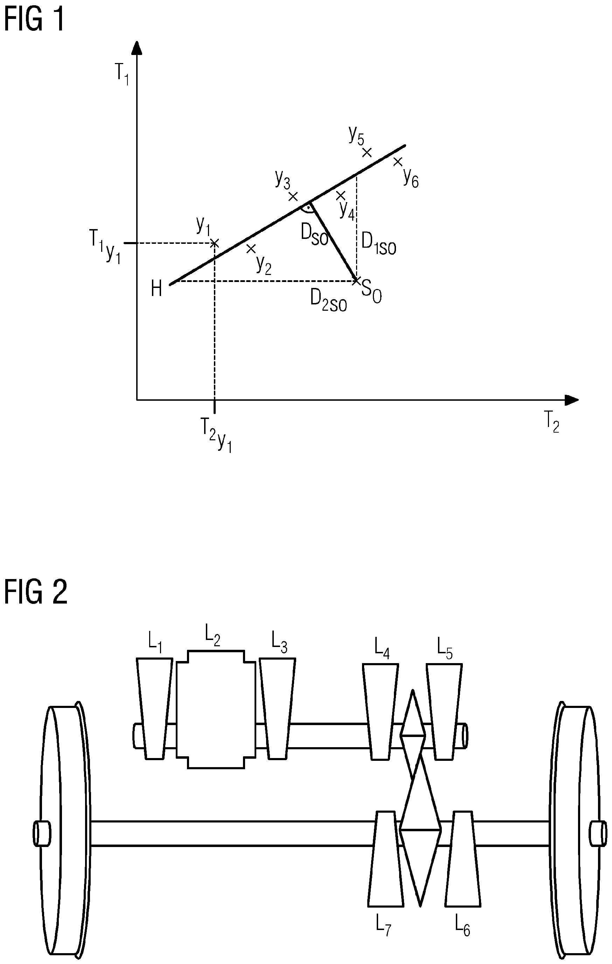

In Fig. 1 ist eine Hauptkomponentenanalyse graphisch in einem Diagramm dargestellt. In diesem Ausführungsbeispiel sind nur Werte zu zwei Variablen derselben physikalischen Größe berücksichtigt, um eine einfache Darstellung zu gewährleisten und eine multidimensionale Darstellung mehrerer Variablen zu vermeiden.

Das Diagramm in Fig. 1 weist zwei Koordinatenachsen T₁ und T₂ auf, um den funktionellen Zusammenhang zwischen den zwei Variablen T₁ und T₂ zu veranschaulichen. Die Datenpunkte Yⱼ , j = 1, 2, 3..., mit den, dieselben Zeitpunkte tⱼ repräsentierenden Werte (T_{1Yj}, T_{2Yj}), sind für einen bekannten Betriebsmodus des technischen Systems vorgegeben und charakterisieren den Normalzustand des technischen Systems in dem vorgegebenen Betriebsmodus. Die vorgegebenen Werte können auch Messwerte zu den zwei Variablen T₁ und T₂ sein - hier also Temperatur-Messwerte verschiedener Temperatur-Sensoren. Dann sind die Messwerte zu jedem Datenpunkt zum selben Zeitpunkt erfasst worden. Sie können auch betreffend die gleiche Komponente des technischen Systems erfasst worden sein.

Während einer Lernphase wird nun eine betriebsmodusabhängige Normalkurve erlernt, indem für jeden Betriebsmodus, beispielsweise "beschleunigend", "bremsend", "Schnellfahrt", "Tunnelfahrt", "Werkstatt", etc., unabhängig voneinander die Hauptkomponente der multivariaten Verteilung (T₁, T₂, ...) der zur Überwachung und Diagnose vorgegebenen Variablen T₁, T₂, ... berechnet werden. In anderen Worten wird der dominante Eigenvektor der Kovarianzmatrix dieser Sensorsignale berechnet.

Die Kurve H ist nun eine eindimensionale Repräsentation der plausibelsten Sensor-Wert-Kombinationen für den jeweils zugrundeliegenden Fahrmodus. Die Kurve H ist die Hauptkomponente der vorgegebenen Werte zu den Variablen T₁ und T₂ zur Beschreibung des Normalzustands des technischen Systems in dem vorgegebenen Betriebsmodus.

H kann in Vektorschreibweise dargestellt werden als H = (m₁, m₂, m₃, ...) + a*(v₁, v₂, v₃, ...), wobei m₁ den Median des ersten Sensorsignals, m₂ den Median des zweiten Sensorsignals, m₃ den Median des dritten Sensorsignals usw. und v₁, v₂, v₃, ... den Hauptkomponentenvektor angibt.

In den aufgespannten Zustandsraum mit den zwei Variablen als Dimensionen zur Beschreibung des Normalzustands werden nun auch Datenpunkte aus Werten zu den zwei Variablen zur Beschreibung eines momentanen Betriebszustands eingetragen. Jeder Datenpunkt repräsentiert die während des Betriebs zu einem Zeitpunkt t₀, t₁, t₂ ... erfassten Werte zu den zwei Variablen. Die Werte T_{1S0} und T_{2S0} des Datenpunkt S₀ sind zu einem Zeitpunkt t₀ während des Betriebs des technischen Systems von den Temperatursensoren erfasst worden.

Für diese Datenpunkte wird die Abweichung von der erlernten Normalkurve ermittelt. Hierzu wird für jeden Datenpunkt der Vektor D = (D₁, D₂, ...) mit der kürzesten Distanz von der entsprechenden betriebsmodusabhängigen Normalkurve berechnet - veranschaulicht als D_{S0} = (D_{1S0}, D_{2S0}). Jeder Eintrag Dᵢ gibt darin an, wie weit der Wert des Sensors i vom im Gesamtbild plausibelsten Wert abweicht.

Anhand der Norm des Vektors D wird anschließend zunächst entschieden, ob dieser einen Normalzustand beschreibt. Falls nicht, wird in einem zweiten Schritt anhand des Musters von Abweichungen (der Einträge im Distanzvektor D) ein Fehlerbild zugeordnet.

Konkret kann der Wert PR = (D₁^4 + D₂^4 + ...) berechnet werden. Ist dieser Wert kleiner als ein systemabhängiger Grenzwert E₁, also PR<E₁<2, so handelt es sich um einen Sensor-Fehler im Sensor mit dem größten Eintrag in D. Ist der Wert größer als ein systemabhängiger Grenzwert E₂, also N>PR>E₂>N/2, so handelt es sich um eine betriebsmoduserzeugte Abweichung. Werden weiterhin K Komponenten mit jeweils L ähnlichen Sensoren im gleichen Fahrzeug bewertet, so gilt, dass 3*L/2>PR>L/2 für einen Fehler in der Komponente, zu der der Sensor mit dem größten Eintrag D gehört, während ein Wert von PR nahe K ebenfalls auf einen noch nicht erfassten Fahrmodus hinweisen kann.

Ein mehrfach hintereinander auftretendes und auf einen Komponenten-Ausfall hinweisendes Muster kann genutzt werden, um Wartungsanforderungen zu erzeugen.

Das Verfahren dient dazu automatisierte Normkurven zu erstellen, die Auffälligkeiten in der Operation von Komponenten detektieren und aus dem Muster jeder Auffälligkeit den vorliegenden Fehler abzuleiten.

In Fig. 2 ist eine Antriebskomponente eines Schienenfahrzeugs skizziert. Es umfasst zwei Räder einer Achse, einen Antriebsmotor oder auch Fahrmotor genannt sowie ein Getriebe zur Kraftübertragung von einer Antriebswelle auf die Achse.

Zur Unterscheidung von Sensor-, Lüfter- und Lagerschäden im Antrieb von Hochgeschwindigkeitszügen werden neben der Außentemperatur und der Fahrgeschwindigkeit, die für alle Antriebskomponenten eines Schienenfahrzeugs identisch sind, für jede baugleiche oder bauähnliche Antriebskomponente die Zeitreihen der Sensoren erfasst. Im vorliegenden Beispiel sind das:
L₁ misst die Temperatur eines ersten Fahrmotorlagers,
L₂ misst die Temperatur eines Ständerblechpakets,
L₃ misst die Temperatur eines zweiten Fahrmotorlagers,
L₄ misst die Temperatur eines ersten Getriebelagers eines kleinen Ritzels,
L₅ misst die Temperatur eines zweiten Getriebelagers des kleinen Ritzels,
L₆ misst die Temperatur eines ersten Getriebelagers eines großen Getrieberads,
L₇ misst die Temperatur eines zweiten Getriebelagers des großen Getrieberads.

Darüber hinaus können noch Radsatz-Innenlager-Temperaturen und Radsatz-Außenlager-Temperaturen erfasst werden.

Aus technischer Sicht besteht die Kopplung der Temperaturen T_{L1} bis T_{L7} durch die Lüftung. Die Kühlungsluft wird bei L₁ angesaugt, erwärmt sich im Fahrmotor (L₂) und wird dann durch die restlichen Komponenten L₃ bis L₇ abgeführt.

Anhand der Temperaturen der Antriebskomponente, die an verschiedenen Stellen, jedoch jeweils zum selben Zeitpunkt erfasst werden, soll die Funktion der Antriebskomponente überwacht werden. Da die Komponententemperaturen sich gegenseitig beeinflussen, aber Ingenieurmodell nicht vorliegt, wird zunächst statistisch die normale Operationskennlinie des Motors (typische Verteilung der Sensor-Werte) bestimmt. Große Abweichungen einer Messung von dieser Kennlinie werden anschließend zur Erkennung eines kritischen Zustands genutzt.

Als Eingangsgrößen werden die genannten Temperaturen jeder der baugleichen Antriebskomponenten des Schienenfahrzeugs verwendet und daraus ihre Normalverteilung erstellt. Ergibt eine Hauptkomponentenanalyse eines Testdatensatzes über einen längeren Zeitraum beispielsweise, dass über 80% der Variation im Datensatz durch die erste Komponente erklärt wird, wird zunächst diese dominante Hauptkomponente als Kennlinie für die normale Antriebsoperation verwendet.

Dann wird die Distanz zu dieser Normalverteilung für neue Messwerte berechnet. Anhand der Fehlermuster wird erkannt, ob es sich um einen Sensor-Fehler, Probleme eines Lüfters, betriebsmodusabhängige Fehler oder um Kommunikationsprobleme handelt. Aus den Auffälligkeiten werden Störmeldungen erstellt.

## Patentansprüche

1. Verfahren zur Diagnose eines technischen Systems, wobei Abweichungen von Werten (T_{1Yj}, T_{2Yj}) zu wenigstens n, mit n≥2, Variablen (T₁, T₂) zur Beschreibung eines momentanen Zustands des technischen Systems zu einem bestimmten Zeitpunkt von vorgegebenen Werten zur Beschreibung eines Normalzustands ermittelt werden, um auf einen Fehler zu schließen, **gekennzeichnet durch** folgende Verfahrensschritte:
a. Durchführen einer Hauptkomponentenanalyse von vorgegebenen Werten (T_{1Yj}, T_{2Yj}) zu den wenigstens n, mit n≥2, Variablen (T₁, T₂) zur Beschreibung des Normalzustands des technischen Systems und Ermitteln wenigstens einer Hauptkomponente (H) der n Variablen (T₁, T₂), wobei die n Variablen (T₁, T₂) dieselbe physikalische Größe beschreiben und/oder, dass die Werte der n Variablen (T₁, T₂) den Zustand derselben Komponente des technischen Systems beschreiben;
b. Vorgeben der wenigstens einen Hauptkomponente (H) zur Beschreibung des Normalzustands des technischen Systems, wobei höchstens x, mit 1≤x<n, Hauptkomponenten (H) der n Variablen (T₁, T₂) zur Beschreibung des Normalzustands vorgegeben werden;
c. Ermitteln der Abweichungen der Werte zu den n Variablen (T₁, T₂) zur Beschreibung des momentanen Zustands des technischen Systems von der wenigstens einen vorgegebenen Hauptkomponente (H) zur Beschreibung des Normalzustands, um auf einen Fehler zu schließen.

2. Verfahren nach Anspruch 1, **dadurch gekennzeichnet, dass** die Verfahrensschritte a. und b. während einer Lernphase ausgeführt werden und Verfahrensschritt c während einer Betriebsphase.

3. Verfahren nach einem der Ansprüche 1 oder 2, **dadurch gekennzeichnet, dass** Verfahrensschritt a. jeweils für m, mit m≥2,voneinander verschiedenen Betriebsmodi ausgeführt wird, wobei in Verfahrensschritt b. die wenigstens eine Hauptkomponente (H) zur Beschreibung des Normalzustands in Abhängigkeit eines momentanen Betriebsmodus vorgegeben wird.

4. Verfahren nach Anspruch 1, **dadurch gekennzeichnet, dass** nur die Hauptkomponenten (H), die zusammen wenigstens 70% der gesamten Varianz der Werte der n Variablen zur Beschreibung des Normalzustands abdecken, vorgegeben werden.

5. Verfahren nach einem der Ansprüche 1 bis 4, **dadurch gekennzeichnet, dass** in Verfahrensschritt b. nur die dominante Hauptkomponente (H) vorgegeben wird.

6. Verfahren nach einem der Ansprüche 1 bis 5, **dadurch gekennzeichnet, dass** in einem dem Verfahrensschritt c. folgenden Verfahrensschritt d. in Abhängigkeit des Maßes der Abweichung auf einen vorgegebenen Fehler geschlossen wird.

7. Verfahren nach einem der Ansprüche 1 bis 6, **dadurch gekennzeichnet, dass** in Verfahrensschritt c. zur Ermittlung der Abweichung eine Distanz (D₁, D₂) der Werte der n Variablen (T₁, T₂) zur Beschreibung des momentanen Zustands zu der wenigstens einen vorgegebenen Hauptkomponente (H) zur Beschreibung des Normalzustands ermittelt wird.

8. Computerprogrammprodukt umfassend Befehle, die bei der Ausführung des Programms durch ein geeignetes mobiles Endgerät dieses veranlassen, das Verfahren nach einem der Ansprüche 1 bis 7 auszuführen.

9. Datenträger, auf dem das Computerprogrammprodukt nach Anspruch 8 gespeichert ist.

10. Vorrichtung umfassend ein technisches System und eine Auswerteeinheit, wobei die Auswerteeinheit geeignet ausgebildet ist zur:
- Durchführung einer Hauptkomponentenanalyse von vorgegebenen Werten zu n, mit n≥2, Variablen (T₁, T₂) zur Beschreibung eines Normalzustands des technischen Systems und Ermittlung wenigstens einer Hauptkomponente (H) der n Variablen (T₁, T₂), wobei die n Variablen (T₁, T₂) dieselbe physikalische Größe beschreiben und/oder, dass die Werte der n Variablen (T₁, T₂) den Zustand derselben Komponente des technischen Systems beschreiben;
- Vorgabe der wenigstens einen Hauptkomponente (H), höchstens von x, mit 1≤x<n, Hauptkomponenten (H) der n Variablen (T₁, T₂) zur Beschreibung des Normalzustands des technischen Systems;
- Ermittlung von Abweichungen von Werten zu den n Variablen (T₁, T₂) zur Beschreibung eines momentanen Zustands des technischen Systems von der wenigstens einen vorgegebenen Hauptkomponente (H) zur Beschreibung des Normalzustands, um auf einen Fehler zu schließen.

11. Vorrichtung nach Anspruch 10, **dadurch gekennzeichnet, dass** das technische System ein Schienenfahrzeug ist.

## Claims

1. Method for diagnosing a technical system, wherein deviations of values (T_{1Yj}, T_{2Yj} ) relating to at least n, with n≥2, variables (T₁, T₂) for describing a current state of the technical system at a specific time from predefined values for describing a normal state are ascertained in order to infer a fault, **characterized by** the following method steps:
a. performing a principal component analysis of predefined values (T_{1Yj}, T_{2Yj}) relating to the at least n, with n≥2, variables (T₁, T₂) for describing the normal state of the technical system and ascertaining at least one principal component (H) of the n variables (T₁, T₂), wherein the n variables (T₁, T₂) describe the same physical quantity and/or wherein the values of the n variables (T₁, T₂) describe the state of the same component of the technical system;
b. predefining the at least one principal component (H) for describing the normal state of the technical system, wherein no more than x, with 1≤x<n, principal components (H) of the n variables (T₁, T₂) for describing the normal state are predefined;
c. ascertaining the deviations of the values relating to the n variables (T₁, T₂) for describing the current state of the technical system from the at least one predefined principal component (H) for describing the normal state in order to infer a fault.

2. Method according to Claim 1, **characterized in that** method steps a. and b. are carried out during a learning phase and method step c. is carried out during an operating phase.

3. Method according to either of Claims 1 and 2, **characterized in that** method step a. is carried out for each of m, with m≥2, different operating modes, wherein in method step b. the at least one principal component (H) for describing the normal state is predefined on the basis of a current operating mode.

4. Method according to Claim 1, **characterized in that** only the principal components (H) that together cover at least 70% of the total variance of the values of the n variables for describing the normal state are predefined.

5. Method according to one of Claims 1 to 4, **characterized in that** in method step b. only the dominant principal component (H) is predefined.

6. Method according to one of Claims 1 to 5, **characterized in that** in a method step d. that follows method step c. the extent of the deviation is taken as a basis for inferring a predefined fault.

7. Method according to one of Claims 1 to 6, **characterized in that** in method step c. the deviation is ascertained by ascertaining a distance (D₁, D₂) of the values of the n variables (T₁, T₂) for describing the current state from the at least one predefined principal component (H) for describing the normal state.

8. Computer program product comprising instructions that, when the program is executed by a suitable mobile terminal, cause said terminal to carry out the method according to one of Claims 1 to 7.

9. Data carrier on which the computer program product according to Claim 8 is stored.

10. Apparatus comprising a technical system and an evaluation unit, wherein the evaluation unit is suitably designed to:
- perform a principal component analysis of predefined values relating to n, with n≥2, variables (T₁, T₂) for describing a normal state of the technical system and ascertain at least one principal component (H) of the n variables (T₁, T₂), wherein the n variables (T₁, T₂) describe the same physical quantity and/or wherein the values of the n variables (T₁, T₂) describe the state of the same component of the technical system;
- predefine the at least one principal component (H), no more than x, with 1≤x<n, principal components (H) of the n variables (T₁, T₂) for describing the normal state of the technical system;
- ascertain deviations of values relating to the n variables (T₁, T₂) for describing a current state of the technical system from the at least one predefined principal component (H) for describing the normal state in order to infer a fault.

11. Apparatus according to Claim 10, **characterized in that** the technical system is a rail vehicle.

## Revendications

1. Procédé de diagnostic d'un système technique, dans lequel on détermine des écarts de valeurs (T_{1Yj}, T_{2Yj}) d'au moins n, avec n ≥ 2, variables (T₁, T₂) de description d'un état instantané du système technique à un instant déterminé à des valeurs données à l'avance de description d'un état normal, afin de décider d'un défaut, **caractérisé par** les stades de procédé suivants :
a. on effectue une analyse en composantes principales de valeurs (T_{1Yj}, T_{2Yj}) données à l'avance d'au moins n, avec n ≥ 2, variables (T₁, T₂) de description de l'état normal du système technique et on détermine au moins une composante (H) principale des n variables (T₁, T₂), dans lequel les n variables (T₁, T₂) décrivent la même grandeur physique et/ou en ce que les valeurs des n variables (T₁, T₂) décrivent l'état du même composant du système technique ;
b. on prescrit la au moins une composante (H) principale de description de l'état normal du système technique, dans lequel on prescrit au plus x, avec 1 ≤ x < n, composante (H) principale des n variables (T₁, T₂) de description de l'état normal ;
c. on détermine les écarts des valeurs des n variables (T₁, T₂) de description de l'état instantané du système technique, au au moins une composante (H) principale donnée à l'avance de description de l'état normal, pour décider d'un défaut.

2. Procédé suivant la revendication 1, **caractérisé en ce que** l'on effectue les stades a. et b. du procédé pendant une phase d'apprentissage et le stade c. pendant une phase de fonctionnement.

3. Procédé suivant l'une des revendication 1 ou 2, **caractérisé en ce que** l'on effectue le stade a. du procédé respectivement pour m, avec m ≥ 2, modes de fonctionnement différents les uns des autres, dans lequel, dans le stade b. du procédé, on prescrit la au moins une composante (H) principale de description de l'état normal en fonction d'un mode de fonctionnement instantané.

4. Procédé suivant la revendication 1, **caractérisé en ce que** l'on prescrit seulement les composantes (H) principales, qui recouvrent ensemble au moins 70 % de toute la variance des valeurs des n variables de description de l'état normal.

5. Procédé suivant l'une des revendication 1 à 4, **caractérisé en ce que**, dans le stade b. du procédé, on prescrit seulement la composante (H) principale prépondérante.

6. Procédé suivant l'une des revendication 1 à 5, **caractérisé en ce que**, dans un stade d. du procédé, suivant le stade c. du procédé, on déduit un défaut donné à l'avance en fonction de la grandeur de l'écart.

7. Procédé suivant l'une des revendication 1 à 6, **caractérisé en ce que**, dans le stade c. du procédé, on détermine, pour la détermination de l'écart, une distance (D₁, D₂) des valeurs des n variables (T₁, T₂), de description de l'état instantané par rapport à la moins une composante (H) principale donnée à l'avance de description de l'état normal.

8. Produit de programme d'ordinateur comprenant des instructions qui, lors de la réalisation du programme par un terminal mobile approprié, font que celui-ci effectue le procédé suivant l'une des revendications 1 à 7.

9. Support de données, sur lequel est mis dans la mémoire un produit de programme d'ordinateur suivant la revendication 8.

10. Installation comprenant un système technique et une unité d'analyse, dans laquelle l'unité d'analyse est constituée de manière appropriée pour :
- effectuer une analyse en composantes principales de valeurs données à l'avance de n, avec n ≥ 2, variables (T₁, T₂) de description d'un état normal du système technique, et déterminer au moins une composante (H) principale des n variables (T₁, T₂), dans lequel les n variables (T₁, T₂) décrivent la même grandeur physique et/ou en ce que les valeurs des n variables (T₁, T₂) décrivent l'état du même composant du système technique ;
- prescrire la au moins une composante (H) principale de description de l'état normal du système technique, dans lequel on prescrit au plus x, avec 1 ≤ x < n, composantes (H) principales des n variables (T₁, T₂) de description de l'état normal ;
- déterminer des écarts des valeurs des n variables (T₁, T₂) de description de l'état instantané du système technique à la au moins une composante (H) principale donnée à l'avance de description de l'état normal, pour décider d'un défaut.

11. Installation suivant la revendication 10, **caractérisée en ce que** le système technique est un véhicule ferroviaire.
